# DEMANDE DE BREVET EUROPEEN

(11) **EP 1 630 753 A1**
(43) Date de publication de la demande: **01.03.2006**
(21) Numéro de dépôt: 04104112.0
(22) Date de dépôt: 26.08.2004
(51) Int. Cl.: G07F 7/10, G06F 19/00, G09B 23/28

(54) **Méthode de gestion de l'accès à une prestation ou à un produit**

(71) Demandeur: polyright SA, 1951 Sion (CH)
(72) Inventeur: Clivaz, Paul-Alain, 3968 Veyras (CH); Fox, Ray, 1911 Ovronnaz (CH); Mazard, Ludovic, 1996 Basse-Nendaz (CH); Wannier, David, 3962 Montana (CH)
(74) Mandataire: Wenger, Joel-Théophile

(57) **Abrégé**

Le but de la présente invention est de proposer une méthode de gestion de l'accès à une prestation ou un produit qui permette la souplesse du crédit librement attribuable et le contrôle sur l'utilisation de ce crédit qui est le propre du mode "prestation".

Ce but est atteint par une méthode de gestion de droit à une prestation représentant un produit ou un service par un utilisateur disposant d'un support de données portable comprenant un identifiant unique, ladite prestation étant gérée par un terminal local couplé à un lecteur de support de données, ladite prestation appartenant à un groupe comprenant au moins un produit ou un service, cette méthode comprenant les étapes suivantes :
- lecture de l'identifiant personnel du support de données par le lecteur,
- acquisition de l'identifiant de la prestation,
- lecture de tout ou partie des données de transactions précédemment effectuées en relation avec ledit identifiant personnel et ledit groupe,
- lecture de droits liés audit groupe, ces droits comprenant un premier nombre maximal de prestations par une première unité de temps,
- détermination si le premier nombre maximal par la première unité de temps est atteint pour ladite prestation et par rapport audit identifiant personnel,
- accès ou refus à la prestation selon le résultat de la comparaison,
- mémorisation de la transaction en cas d'acceptation de la prestation.

## Description

La présente invention concerne le domaine de la distribution d'objets ou l'accès à des services grâce à l'identification basée sur un support de données portable.

Dans bien des domaines, l'argent comptant a été remplacé par un support personnel qui stocke un crédit sous forme électronique. A chaque fois que l'on souhaite accéder à un produit, on présente le support personnel qui est lu par un lecteur de vérification. Ce lecteur vérifie le crédit dont l'usager dispose et accepte ou refuse l'accès au produit selon le prix du produit et le crédit de l'usager.

Le support personnel peut prendre de multiples formes. Dans une forme simplifiée, il peut s'agir d'une simple carte avec un code-barre ou une piste magnétique. Souvent, il ne sert que comme identifiant, toutes les autres opérations, soit la gestion du crédit, l'éventuelle vérification d'un mot de passe, sont effectuées en-ligne avec un serveur.

Dans des versions plus sophistiquées, il s'agit d'une carte à puce comprenant des fonctionnalités évoluées notamment dédiées à la sécurisation de l'accès aux informations contenues dans ladite carte.

Selon un autre mode de comptabilisation, le support personnel donne accès à un certain nombre de prestations. Ceci est par exemple le cas pour une carte permettant l'accès à 10 séances de cinéma.

Dans le premier mode dit "crédit", il n'est pas possible de gérer l'utilisation de ce crédit et un adolescent disposant d'une telle carte pour le restaurant scolaire pourra sans autre acheter des boissons gazeuses et des glaces plutôt qu'un repas chaud.

Dans le second mode dit "prestation", l'utilisation est figée et si le prix d'une prestation venait à changer, les cartes émises auront accès à la prestation au prix antérieur. Ceci force les opérateurs tels qu'un restaurateur, à unifier tous ses prix pour que la carte soit valable pour tous les repas.

Ainsi le but de la présente invention est de proposer une méthode de gestion de l'accès à une prestation ou un produit qui permette la souplesse du crédit librement attribuable et le contrôle sur l'utilisation de ce crédit qui est le propre du mode "prestation".

Ce but est atteint par une méthode de gestion de droit à une prestation représentant un produit ou un service par un utilisateur disposant d'un support de données portable comprenant un identifiant unique, ladite prestation étant gérée par un terminal local couplé à un lecteur de support de données, ladite prestation appartenant à un groupe comprenant au moins un produit ou un service, cette méthode comprenant les étapes suivantes :
- lecture de l'identifiant personnel du support de données par le lecteur,
- acquisition de l'identifiant de la prestation,
- lecture de tout ou partie des données de transactions précédemment effectuées en relation avec ledit identifiant personnel et ledit groupe,
- lecture de droits liés audit groupe, ces droits comprenant un premier nombre maximal de prestations par une première unité de temps,
- détermination si le premier nombre maximal par la première unité de temps est atteint pour ladite prestation et par rapport audit identifiant personnel,
- accès ou refus à la prestation selon le résultat de la comparaison,
- mémorisation de la transaction en cas d'acceptation de la prestation.

Selon l'invention, le support de données portable peut être réalisé sous un grand nombre de formes tels que décrites ci-dessus. Bien que la suite de la description prenne comme exemple une carte à puce, on peut donner une forme quelconque à ce support tel qu'un TAG, une montre ou une clé avec puce électronique sans contact, etc. Dans une forme simplifiée de l'invention, dite on-line, le support ne contient qu'un numéro d'identification unique. Ce numéro permet d'accéder, via le lecteur, aux données personnelles de l'utilisateur, à savoir les précédentes transactions et son profil utilisateur.

Avant même de traiter le crédit, la méthode de l'invention s'intéresse à savoir si l'utilisateur présentant sa carte a le droit à cette prestation. Cette décision est prise selon les règles appliquées à la prestation considérée. Une telle règle, pour une boisson, peut être un nombre de boisson maximal par jour par exemple.

Sur la base de l'identifiant de l'utilisateur, l'ensemble des prestations précédentes sera comparé à cette règle et si la condition limite n'est pas atteinte, la prestation sera acceptée.

Bien qu'une prestation puisse être seule dans un groupe, la notion de groupe est importante car une prestation est rarement définie pour elle-même mais fait partie d'un groupe de la même nature. On pourrait ainsi avoir un premier groupe pour des boissons gazeuses non sucrées, un second groupe pour des boissons sucrées, un troisième groupe pour des boissons faiblement alcoolisées (bière) et un quatrième groupe pour des boissons alcoolisées (vin). La prestation définit l'objet, soit une bouteille de vin rouge ou de vin blanc, les deux objets appartenant au même groupe.

L'invention sera mieux comprise grâce à la description détaillée qui va suivre et qui se réfère à la figure unique annexée qui est donnée à titre d'exemple nullement limitatif, et qui illustre un mode de réalisation de l'invention.

Le support de données portable SDP illustré dans notre exemple est de type carte à puce sans contact. La lecture de son numéro de série unique permet d'identifier un utilisateur.

Dans une phase d'initialisation, les produits ou services participant à la méthode de l'invention (tous les produits ou services ne sont pas nécessairement concernés), sont organisés par groupes selon une logique axée sur la catégorie de chaque produit. Pour de la restauration, on trouvera par exemple un groupe "repas chaud", "repas froid", "restauration rapide" tels que sandwich, "complément sucré" tels que desserts ou barres de céréales, "boisson sucrée", "boisson non sucrée", "boisson faiblement alcoolisée", "boisson alcoolisée" etc.

Dans une seconde phase, chaque utilisateur se voit attribuer des règles d'accès à ces produits. Ainsi pour un utilisateur adolescent, on fixera un nombre de 2 pour le groupe "repas chaud" pour une première unité de temps d'un jour. Il ne pourra pas consommer plus de deux repas chauds par jour, ce chiffre 2 étant fixé pour pouvoir dépanner un ami.

Selon une variante de l'invention, on peut fixer un deuxième maximum de 6 pour une semaine. Sur les quatre repas pris à la cantine, il ne pourra dépanner un ami que deux fois durant la semaine.

On peut ainsi faire de même pour les boissons sucrées et en limiter le nombre par jour ou par semaine selon le souhait des parents.

Cette méthode offre une grande souplesse d'utilisation tout en limitant les excès possibles.

Une fois le premier test qui fonctionne en tout ou rien (accès ou refus) effectué, on peut se préoccuper de savoir si le crédit est suffisant pour couvrir l'achat de la prestation.

Il est à noter que la méthode de l'invention peut ne concerner que l'accès ou le refus à la prestation. En effet, dans un contexte ou l'on paie par forfait toutes les prestations, cette méthode permet d'en limiter l'abus ou une mauvaise utilisation des prestations offertes. Ainsi, un adolescent ne pourra manger des sandwichs tous les jours grâce à cette méthode.

Selon un premier mode de réalisation, dit on-line tel qu'illustré sur la figure annexée, le support de données portable SDP ou carte ne comporte qu'un identifiant. Selon notre exemple il s'agit d'une carte avec une puce sans contact. D'autres solutions peuvent être mises en oeuvre par une carte à puce contact, par code-barre ou par piste magnétique. Un terminal local LT tel qu'une caisse enregistreuse, dispose d'un lecteur RD de carte SDP. Ce lecteur vient lire l'identifiant unique de la carte SDP et le terminal local LT va interroger une base de données DB au travers d'un centre de gestion CG. Ce centre est en charge de contrôler la délivrance ou non de la prestation. Dans une variante simplifiée, le centre de gestion et la base de données sont localisés dans la même machine et forment un seul appareil.

Dans la base de données DB sont stockées les transactions déjà effectuées par cette carte. Le terminal local LT transmet l'identifiant de l'utilisateur de la carte et la description de la prestation concernée. Le centre de gestion CG, en collaboration avec les données de la base de données DB va vérifier les règles appliquées aux prestations souhaitées en ayant connaissance de toutes les informations utiles pour prendre une décision, à savoir l'identifiant de l'utilisateur, les transactions associées, la prestation concernée et les paramètres physiques et logiques du terminal local (le lieu par exemple, l'heure de la requête) effectuant la requête de prestations.

Le centre de gestion va déterminer si le maximum est atteint pour la durée déterminée selon le groupe auquel appartient la prestation souhaitée. Dans l'affirmative, un message négatif sera transmis au terminal local LT à destination de l'utilisateur.

La durée peut être déterminée de deux manières. Prenons l'exemple d'une durée d'une semaine. La première consiste à définir une plage de temps entre la date courante et une date 7 jours en arrière et compter toutes les prestations délivrées pour le groupe concerné. Selon une seconde manière, on considère la semaine officielle à savoir du lundi au dimanche. A chaque lundi, les prestations précédentes sont ignorées et on recommence à zéro.

Si la transaction est acceptée, elle est mémorisée dans la base de données pour déterminer la décision lors de futurs achats.

Selon un autre mode de réalisation de l'invention dit off-line, tout ou partie des données de transactions sont stockées sur le support de données portable SDP. Ce support ou carte est de type électronique et comporte de la mémoire. II peut s'agir d'une carte à contact de type ISO 7816 ou sans contact de type ISO14443 ou 15693, voire tout autre module électronique portable.

Selon une première variante, le terminal local LT identifie la prestation souhaitée et transmet les données de cette prestation à la carte SPD. La vérification de l'accès ou du refus à la prestation souhaitée se fait dans la carte et un message approprié est retourné au terminal local LT. Si le terminal ne peut reconnaître ce type de message (incompatibilité de version par exemple), la carte va retourner un crédit nul en cas de vérification négative à l'accès à cette prestation. L'effet sera bien entendu le refus à la prestation par le terminal local.

Selon une deuxième variante, les données de transactions sont transmises au terminal local par la carte SPD. Les règles peuvent être également stockées dans la carte ou, au contraire, stockées dans la base de données DB.

En fonction des informations reçues, soit de la carte, soit du centre de gestion, le terminal local peut décider d'accorder ou de refuser la prestation. Les données de transactions effectuées sont ensuite réinscrites sur la carte SPD.

Pour la gestion du crédit, le fonctionnement est le même à savoir que le terminal local interroge la carte sur le crédit restant, et s'il est suffisant, une commande de débit du montant de la prestation est transmise à la carte. Une confirmation de débit est retournée au terminal local pour informer le vendeur (ou un automate de vente) que la prestation peut être délivrée. La transaction est ensuite mémorisée dans le support de données pour les vérifications futures. Il est à noter qu'il n'est pas nécessaire de stocker la désignation exacte de la prestation mais uniquement la désignation du groupe auquel elle appartient. En effet, les vérifications futures ne s'intéressent qu'au nombre de prestations consommées par groupe.

Selon le mode on-line, la gestion du crédit est entièrement pilotée par le centre de gestion. Le crédit est stocké dans la base de données DB et la requête du terminal se fait vers cette base de données.

Selon le mode off-line, le crédit est stocké dans la carte SDP et la requête de débit se fait par le terminal local.

Selon un autre objet de l'invention, la gestion de la valeur à débiter est optimisée en fonction de la consommation passée de l'utilisateur. Il est possible d'accorder des réductions de prix en fonction du volume consommé. Cette réduction peut s'appliquer sur la base d'un groupe de prestations ou à la prestation. Ainsi on peut appliquer une réduction de 10% de la valeur de la prestation si un nombre minimal de prestations appartenant au même groupe a été consommé durant une période donnée. Ce sont les mêmes données des prestations passées qui seront utilisées pour la détermination de cette réduction.

La gestion du crédit peut de plus être déterminée en fonction de paramètres physiques et logiques du terminal local (lieu, groupe), de l'heure et de la date, du groupe d'utilisateurs. Grâce à ces paramètres, il est possible de vendre une boisson à 80% de son prix pour les employés entre 17h et 18h, à condition qu'ils aient déjà consommé une autre boisson de même type au même endroit entre 10h et 11h.

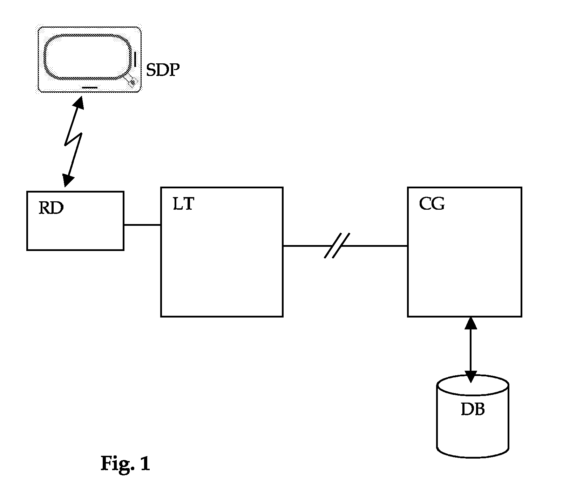

II est rappelé ici que l'invention couvre également une solution intégrée à savoir que dans le même appareil on peut trouver les quatre modules décrits à la figure 1. Le centre de gestion est alors un module logiciel dans cet appareil.

Selon une autre variante, le centre de gestion et la base de données sont communs à un grand nombre de terminaux locaux.

## Revendications

1. Méthode de gestion de droit à une prestation représentant un produit ou un service par un utilisateur disposant d'un support de données portable (SDP) comprenant un identifiant unique, ladite prestation étant gérée par un terminal local (LT) disposant d'un lecteur de support de données (RD) et relié à une base de donnés (DB) via un centre de gestion (CG), ladite prestation appartenant à un groupe comprenant au moins un produit ou un service, cette méthode comprenant les étapes suivantes :
- lecture de l'identifiant personnel du support de données (SDP) par le lecteur (RD),
- acquisition de l'identifiant de la prestation,
- lecture de tout ou partie des données de transactions précédemment effectuées en relation avec ledit identifiant personnel et ledit groupe,
- lecture de droits liés audit groupe, ces droits comprenant un premier nombre maximal de prestations par une première unité de temps,
- détermination si le premier nombre maximal par la première unité de temps est atteint pour ladite prestation et par rapport audit identifiant personnel,
- accès ou refus à la prestation selon le résultat de la comparaison,
- mémorisation de la transaction en cas d'acceptation de la prestation.

2. Méthode de gestion selon la revendication 1, **caractérisée en ce que** les droits liés audit groupe comprennent de plus un second nombre maximal de prestations par une seconde unité de temps, cette seconde unité de temps étant supérieure à la première unité de temps.

3. Méthode de gestion selon la revendication 1 ou 2, **caractérisée en ce qu'**un groupe comprend une pluralité de prestations, la détermination du nombre courant de prestations déjà effectuées par première unité de temps ou seconde unité de temps englobant tous les éléments du groupe auquel appartient cette prestation.

4. Méthode de gestion selon l'une des revendications 1 à 3, **caractérisée en ce qu'**un crédit est associé à l'identifiant personnel, et **en ce que** la méthode comprend les étapes suivantes :
- acquisition de la valeur à débiter pour la prestation,
- lecture du crédit propre à l'identifiant du support de données,
- vérification que le crédit est suffisant pour couvrir ladite prestation,
- débiter le crédit de la valeur de la prestation.

5. Méthode de gestion selon la revendication 4, **caractérisée en ce que** la valeur à débiter est minorée en fonction du nombre total de prestations effectuées selon une troisième unité de temps.

6. Méthode de gestion selon la revendication 4, **caractérisée en ce que** la valeur à débiter est une fonction des conditions à l'acquisition préalable d'une ou des prestations du même groupe.

7. Méthode de gestion selon la revendication 6, **caractérisée en ce que** ces conditions comprennent la date et l'heure de l'acquisition de la prestation.

8. Méthode de gestion selon la revendication 6, **caractérisée en ce que** ces conditions comprennent le lieu de l'acquisition de la prestation.

9. Méthode de gestion selon l'une des revendications précédentes, **caractérisée en ce que** les données de transactions précédemment effectuées sont mémorisées sur le support de données portable (SDP).

10. Méthode de gestion selon l'une des revendications précédentes, **caractérisée en ce que** les droits liés au groupe sont mémorisés sur le support de données portable (SDP).

11. Méthode de gestion selon la revendication 4, **caractérisée en ce que** le crédit est stocké sur le support de données (SDP).

12. Méthode de gestion selon les revendications 1 à 8, **caractérisée en ce que** les données de transactions précédemment effectuées sont mémorisées dans une base de données (DB) reliée au centre de gestion (CG) qui est accédée grâce à l'identifiant du support de données.

13. Méthode de gestion selon les revendications 1 à 5, **caractérisée en ce que** les droits liés au groupe sont mémorisés dans une base de données (DB) reliée au centre de gestion (CG) qui est accédée grâce à l'identifiant du support de données.

14. Méthode de gestion selon la revendication 4, **caractérisée en ce que** le crédit est stocké sur une base de données (DB) reliée au centre de gestion (CG) qui est accédée grâce à l'identifiant du support de données.
